# DEMANDE DE BREVET EUROPEEN

(11) **EP 0 723 906 A1**
(43) Date de publication de la demande: **31.07.1996**
(21) Numéro de dépôt: 96100835.6
(22) Date de dépôt: 22.01.1996
(51) Int. Cl.: B62J 11/00

(54) **Dispositif pour l'accrochage d'un casque a une bicyclette, motocyclette ou autre engin**

(30) Priorité: 26.01.1995 IT VI950014
(71) Demandeur: ACCESSORI CICLO SULIVAS di SOLINI FABIO, 36022 Cassola (Vicenza) (IT)
(72) Inventeur: Solini, Fabio, I-36022 Cassola (Vicenza) (IT)
(74) Mandataire: Bettello, Luigi, Dott. Ing.

(57) **Abrégé**

Le dispositif comprend une plaquette (9) qui fait saillie sur le casque (10) et qu'on introduit dans une ouverture (3) pratiquée dans un élément creux (1) en forme de boîte fixé, par exemple à l'aide d'une mâchoire (5), à un tube du cadre de l'engin, par exemple au guidon. Au moyen d'une rotation de 90° du casque à l'encontre du ressort (4), on rend stable la position du casque (10) par rapport à l'élément (1).

## Description

La présente invention a pour objet un dispositif d'accrochage, monté sur un casque ou encastré dans celui-ci, du tue normalement utilisé pour les compétitions sportives ou pour le cyclotourisme.

Le dispositif d'accrochage suivant l'invention est défini à la revendication 1.

Conformément à l'invention on insère une plaquette qui fait saillie sur le casque ou en est solidaire, dans une ouverture appropriée prévue sur une pince fixée, par exemple à l'aide de vis, à un tube du cadre de l'engin, par exemple au guidon ou à une quelconque autre partie du cadre, de façon à ce qu'après une rotation d'environ 90° du casque, ce dernier reste solidement accroché au dispositif d'attache, en libérant ainsi l'utilisateur lorsqu'il s'éloigne de son engin.

Bien évidemment une serrure à clé appropriée pourra être prévue dans le dispositif pour immobiliser en position la plaquette qui fait saillie sur le casque et éviter que ce dernier ne puisse être enlevé facilement.

L'invention sera décrite ci-après de façon plus détaillée à l'aide du dessin annexé, sur lequel :
Fig. 1 est une vue de côté, en partie en coupe, de l'élément creux destiné à se fixer à un tube de la bicyclette et dont certaines parties sont démontées ;
Fig. 2 est la vue par l'avant du même élément.
Fig. 3 représente schématiquement un casque muni d'une plaquette d'attache dans une vue par l'avant ;
Fig. 4 est la vue partielle par dessus du même casque.
Fig. 5 est une vue partielle du casque inséré dans le dispositif d'accrochage mais avant d'avoir été tourné ;
Fig. 6 est la coupe suivant VI-VI (fig. 5) du même dispositif ;
Fig. 7 est une vue partiellle montrant le casque tourné de 90° et solidaire du dispositif d'accrochage, une partie étant représentée en coupe ;
Fig. 8 est la coupe selon le plan VIII-VIII de fig. 7.

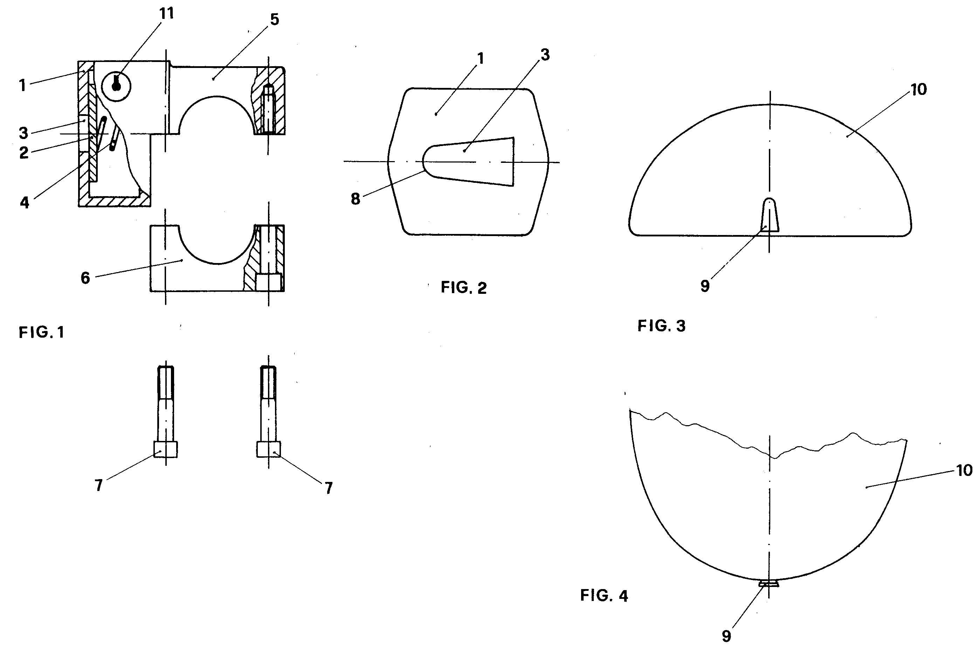

Comme on peut le voir en fig. 1, le dispositif d'accrochage comprend un élément creux 1 en forme de boîte, muni d'un cache 2 qui ferme une ouverture d'entrée 3, en étant soumis à l'action du ressort de poussée 4 ; l'élément 1 en forme de boîte est solidaire d'une demi-pince 5 qui après fixation de la demi-pince 6 sur un tube de la bicyclette, par exemple sur le guidon, au moyen de vis 7, permet audit élément 1 de rester rigidement solidaire de ce tube.

Le même élément 1 en forme de boîte est visible en fig. 2, où l'on peut remarquer que l'ouverture 3 présente un profil trapézoïdal dont le sommet arrondi est référencé 8.

Une plaquette 9 (fig. 3 et 4), qui présente un profil analogue à celui de l'ouverture 3 ménagée dans l'élément 1, mais avec des dimensions légèrement réduites pour permettre de faire pénétrer facilement cette plaquette dans ledit élément, est fixée à la paroi extérieure d'un casque 10, en position axiale avec une orientation verticale lorsque ce casque est à la position normale indiquée sur le dessin.

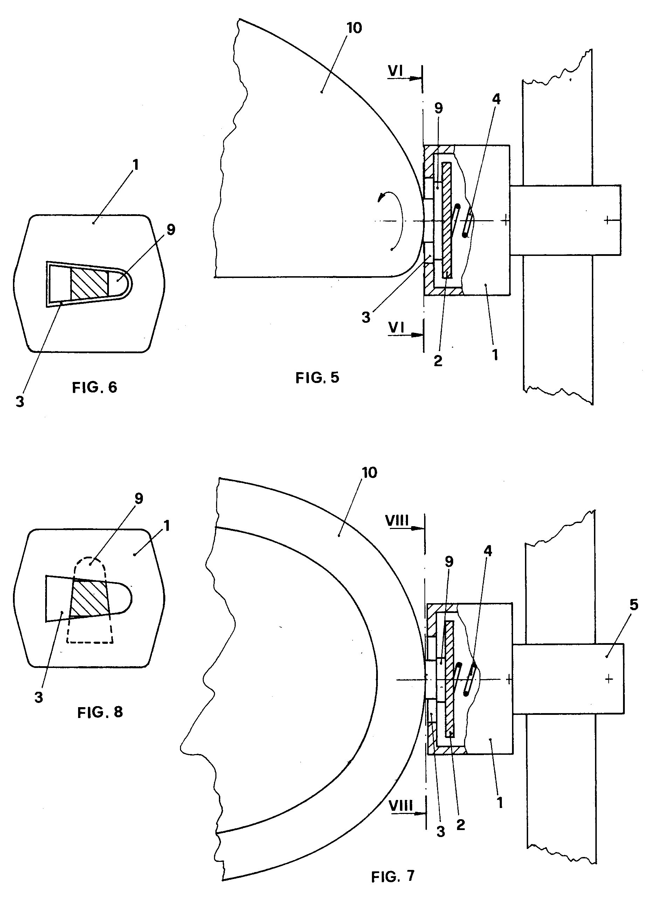

Lorsque l'utilisateur désire accrocher le casque 10 au dispositif, il présente ce casque orienté à la verticale, comme représenté en fig. 5, de manière à pouvoir introduire la plaquette 9 dans l'ouverture ou fente 3 de l'élément 1, en repoussant le cadre 2 à l'encontre de l'action du ressort 4 pour permettre à la plaquette 9 de pénétrer dans l'élément 1, exactement dans la position représentée en coupe en fig. 5.

Si l'on imprime au casque une rotation de 90° suivant son propre axe longitudinal, la plaquette 9 prend l'orientation représentée en tracé interrompu en fig. 8, ce qui lui interdit de se décrocher de l'élément 1, de sorte qu'elle reste solidement accrochée dans cette position grâce à l'action du ressort 4 (fig. 7).

Une serrure éventuelle 11 (fig. 1), prévue de façon appropriée dans l'élément 1, pourra immobiliser le cache 2 dans la position qu'il occupe en fig. 7, après introduction de la plaquette 9 et rotation du casque 10, s'opposant ainsi à la séparation de ce dernier et du tube de la bicyclette, par exemple de la part de personnes mal intentionnées qui voudraient enlever le casque de la bicyclette.

Naturellement, cette particularité n'a pas été représentée en détail puisqu'elle peut prendre différentes formes et différents aspects tout en laissant inchangées les caractéristiques essentielles de l'invention telles qu'elles viennent d'être décrites.

Les détails de réalisation, aussi bien de la plaquette 9 que de l'élément 1, avec son ouverture d'entrée, pourront aussi prendre des formes et aspects différents en conservant les caractéristiques essentielles de l'invention.

Par ailleurs on peut prévoir de monter le dispositif sur une partie du cadre ou du guidon d'une motocuclette ou autre engin tout en conservant les caractéristiques qui viennent d'être décrites.

Dans une autre variante de l'invention, on prévoit de loger la plaquette 9 dans une cavité appropriée ménagée dans le bord du casque 10 de manière à éviter toute blessure aux tiers en cas d'accident.

## Revendications

1. Dispositif pour l'accrochage d'un casque à une bicyclette, motocyclette ou autre engin, caractérisé en ce qu'il comprend un élément creux (1) qui est destiné à être fixé en un point quelconque de l'un des tubes de l'engin, par exemple le guidon, et qui est découpé d'une ouverture (3) normalement fermée par un cache (2) soumis à l'action d'un resort de poussée (4), tandis que sur le casque (10) est prévue une plaquette (9) qui est établie à un profil analogue à celui de l'ouverture (3) et qui fait saillie, par exemple sur une paroi du casque (10), avec une orientation axiale par rapport à ce casque, en permettant l'insertion de cette plaquette (9) dans l'ouverture (3) de l'élément (1) lorsqu'on veut attacher le casque à l'engin, pour le faire ensuite tourner de 90° en repoussant le cache (2) à l'encontre de l'action du ressort (4) et en rendant ainsi stable la position accrochée du casque (10) à l'élément (1).

2. Dispositif selon la revendication 1, caractérisé en ce que l'ouverture (3) pratiquée dans l'élément creux (1) présente un profil sensiblement trapézoïdal, éventuellement avec un sommet (8) arrondi, tout à fait semblable à celui de la plaquette (9), mais de dimensions légèrement plus petites, ce qui permet à cette plaquette (9) de pouvoir être insérée facilement dans l'ouverture (3) et d'être ensuite tournée de 90°, conjointement avec le casque sur lequel elle fait saillie, au moment de l'accrochage.

3. Dispositif selon l'une quelconque des revendications 1 et 2, caractérisé en ce qu'une serrure (11) est prévue sur l'élément (1) pour rendre la plaquette (9) inamovible une fois qu'elle a été introduite dans l'élément creux (1) et placée dans la position d'accrochage en rendant ainsi impossible l'enlèvement du casque de la bicyclette à laquelle il est accroché.

4. Dispositif selon l'une quelconque des revendications 1 à 3, caractérisé en ce que l'élément creux (1) est muni d'une demi-mâchoire (5) qui en coopération avec une demi-mâchoire indépendante (6) et avec des vis d'accrochage (7), permet de fixer ledit élément (1) à un tube quelconque du cadre de l'engin, par exemple au guidon.

5. Dispositif selon l'une quelconque des revendications 1 à 4, caractérisé en ce que la plaquette (9) est encastrée dans une cavité opportunément prévue dans le casque (10), afin d'éviter la présence de parties en saillie dangereuses en cas d'accident.
